# EUROPEAN PATENT SPECIFICATION

(11) **EP 2 387 124 B1**
(45) Date of publication and mention of the grant of the patent: **28.08.2013**
(21) Application number: 10162789.1
(22) Date of filing: 13.05.2010
(51) Int. Cl.: H02J 7/00, H04M 1/04

(54) **Desktop charger for handheld communication device**
Desktopladegerät für eine tragbare Kommunikationsvorrichtung
Chargeur de bureau pour dispositif de communication portatif

(43) Date of publication of application: 16.11.2011
(73) Proprietor: Research In Motion Limited, Waterloo, ON N2L 3W8 (CA)
(72) Inventor: Tao, Di, Mississauga Ontario L4W 0B4 (CA); Wood, Todd Andrew, Waterloo Ontario N2L 3W8 (CA)
(74) Representative: Patel, Binesh

(56) References cited:
- DE-U1- 9 209 947
- FR-A3- 2 885 272
- US-A- 6 157 163
- US-A1- 2006 238 164
- US-A1- 2008 019 082
- US-B1- 6 438 229

## Description

### TECHNICAL FIELD

The following relates to devices for charging and supporting a handheld communication device.

### BACKGROUND

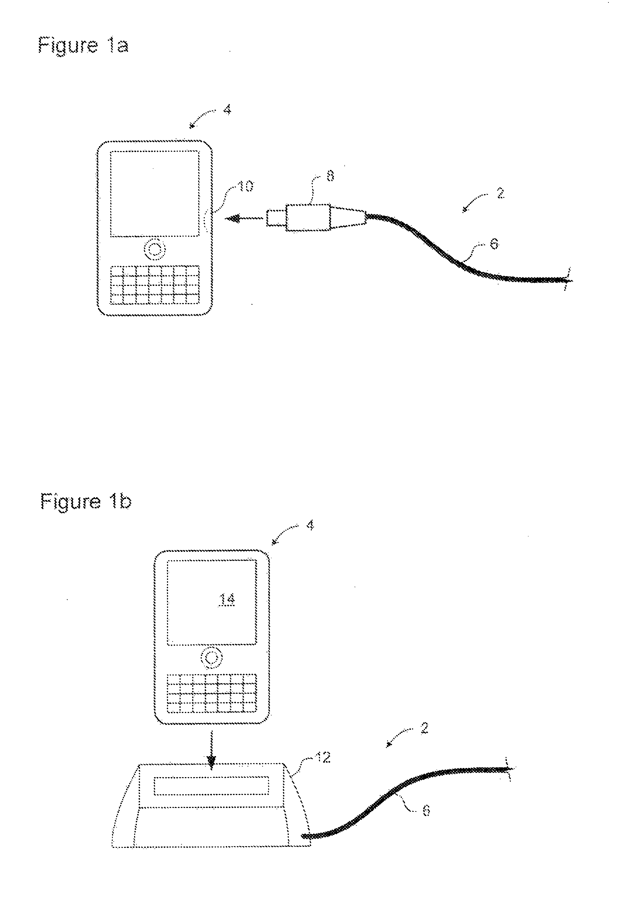

It is well known to use a charger device to recharge the battery of a cable to connect a handheld communication device, such as a portable mobile device (e.g. a hand-held smart phone). In some cases, the charger device is provided as a simple cable assembly of the type illustrated in FIG. 1a. In this case, charger device 2 comprises a cable 6 terminated at one end with a standard plug connector 8 (such as a Universal Serial Bus (USB) or mini-USB, for example) designed to engage a port 10 of the handheld communication device 4. An opposite end of the cable is terminated at a power source (not shown). In some cases, the power source may be a small transformer unit which may be plugged into a wall outlet to provide electrical power to the handheld communication device. In other cases, the power source may be a connector designed to engage a port of a computer, such as a desktop Personal Computer (PC), in which case the charger device 2 may be used to provide both electrical power and a data connection between the handheld communication device 4 and the PC.

FIG. 1b illustrates an alternative arrangement, in which the connector is integrated into a "docking station" 12 which, in addition to providing a connector for electrical power and optionally a data connection, also serves to support the handheld communication device 4 in a position that makes it possible to read a screen 14 of the handheld communication device 4.

The foregoing arrangements and also the arrangements shown in US 2008/0019082 A1 and US 6157163 suffer limitations in that the use of the simple cable of FIG. 1a does not afford any means of supporting the hand-held device in a convenient orientation, whereas the docking station of FIG. 1b can support the hand-held device in a readable orientation, but its size is inconvenient and limits its portability.

### SUMMARY

Aspects of the present invention provide a charger device for use with a handheld communication device. the charger device comprises a cable, a connector element and a support element affixed to the connector element. The connector element includes a connector for engagement with a port of the handheld communication device. The support element is configured to support the handheld communication device in either one of a portrait orientation and a landscape orientation, when the connector is engaged with the port of the handheld communication device.

### BRIEF DESCRIPTION OF THE DRAWINGS

Embodiments will now be described by way of example only with reference to the appended drawings wherein:

FIGs. 1a and 1b illustrate respective handheld charging devices known in the art;

FIGs. 2a and 2b illustrate a charging device;

FIGs. 3a and 3b illustrate use of the charging device of FIG. 2 to support a handheld communication device in a portrait orientation;

FIGs. 4a and 4b illustrate use of the charging device of FIG. 2 to support a handheld communication device in a landscape orientation; and

FIG. 5 illustrate an alternative embodiment of a charging device.

It will be noted that throughout the appended drawings, like features are identified by like reference numerals.

### DETAILED DESCRIPTION

It will be appreciated that for simplicity and clarity of illustration, well-known methods, procedures and components have not been described in detail so as not to obscure the embodiments described herein. Also, the examples given in this description are for illustrative purposes only.

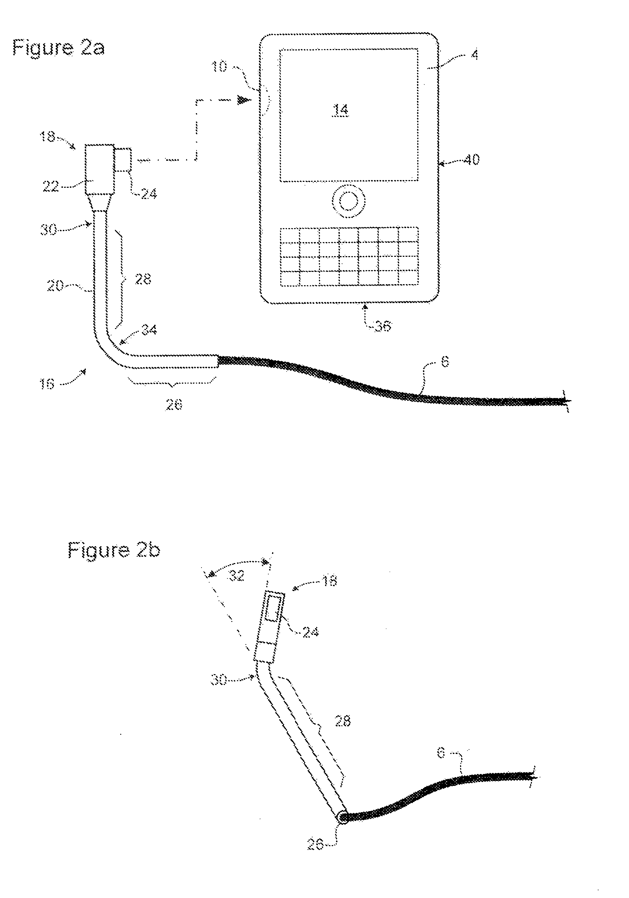

Referring to FIGs. 2a and 2b, there is shown a charging device 16 for a handheld communication device 4, such as for example, a mobile phone. In the embodiment of FIG. 2, the charging device 16 comprises a cable 6, a connector element 18 and a support member 20.

In preferred embodiments, the cable 6 is provided as a conventional flexible cable of a type commonly used for connecting a handheld communication device to a source of electrical power. Accordingly, a free end of the cable (not shown), may terminate with any desired type of termination device, including, but not limited to: a wall plug for connection to a standard wall outlet; or a device plug for connection to a standard port (e.g. a Universal Serial Bus (USB) or mini-USB port) of a computer. In cables terminated by a wall plug, the cable may be limited to a single pair of electrical conductors, and the wall plug may include a transformer or other means for reducing mains power to a Direct Current (DC) voltage having current and voltage values appropriate for charging the battery of the handheld communication device. In cables terminated by a device plug, the cable may include multiple electrical conductors to enable exchange of data between the handheld communication device and the computer, in additional to a pair of electrical conductors for providing DC current to the handheld communication device for charging the battery of the handheld communication device

The connector element 18 preferably comprises a substantially rigid body 22 and a standard plug-type connector 24 designed to engage a standard port 10 (e.g. a USB or mini-USB port) provided on a side of the handheld communication device 4. The plug-type connector 24 includes contacts that are electrically connected to conductors of the cable 6 in a conventional manner. The body 22 may be formed of a plastic material, and serves to mechanically secure the connector 24 to an end of the support member 20, while maintaining a predetermined orientation of the connector 24 relative to the support member 20.

The support member 20 is a substantially rigid structure extending from the connector element 18. In preferred embodiments, the support member 20 is a hollow tubular structure, and has an interior diameter sized to receive the cable 6. With this arrangement, the cable 6 can extend through the support member 20, which contributes to a neat appearance of the charging device 16. The support member 20 may be formed of any suitable material, including metals and plastics.

In the illustrated embodiments, the support member 20 is shaped to define relatively straight base and riser portions 26 and 28 respectively, and head end 30 which defines a desired angle 32 between the riser portion 28 and the connector 24.

The base and riser portions 26 and 28 are separated by a curved portion 34, the radius of which may be selected so as to be large enough to facilitate manufacture of the support member 20 and insertion of the cable 6 therethrough, while at the same time ensuring that the base portion 26 is approximately centered behind the handheld communication device 4 when the connector 24 is engaged with the port 10 on the side of the handheld communication device 4.

The length of the base and riser portions 26 and 28 may be selected as desired. Preferably, the length of the base portion 26 is selected such that, when the connector 24 is engaged with the port 10 on the side of the handheld communication device 4, the base portion 26 will extend across less than the entire width of the handheld communication device 4. Preferably, the length of the riser portion 28 is selected such that a distance between the connector 24 and the base portion 26 is approximately equal to a distance between the port 10 on the side of the handheld communication device 4 and an end 36 of the handheld communication device 4.

The head end 30 may define any desired angle 32 between the riser portion 28 and the connector 24. The angle 32 is preferably selected such that, when the connector 24 is engaged with the port 10 on the side of the handheld communication device 4, the base portion 28 extends parallel to the end 26 of the handheld communication device 4 and separated therefrom by a desired distance. In some embodiments, an angle of about 30° is satisfactory, but other angles may equally be used, as desired.

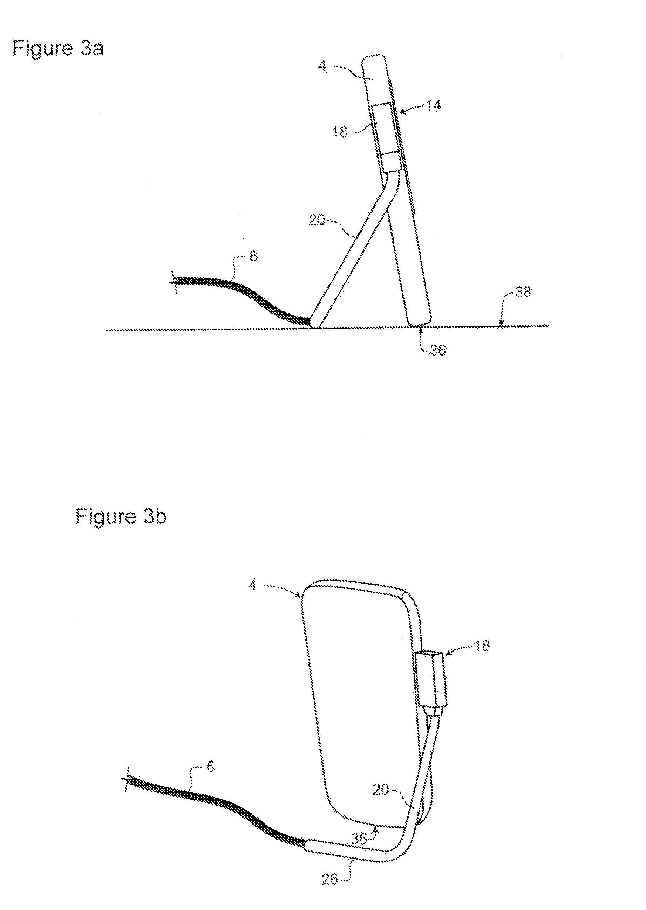

FIGs. 3a and 3b respectively show side and perspective views of the charging device 16 of FIGs. 2a and 2b, in use for supporting a handheld communication device 4 in a portrait orientation. As may be seen in FIG. 3a, when the connector 24 is engaged with the port 10 on the side of the handheld communication device 4, the connector 24 provides both an electrical connection between handheld communication device 4 and the cable 6, and a mechanical connection between the handheld communication device 4 and the connector body 22, and thus the support member 20. The handheld communication device 4 can thus be placed on a horizontal surface 38 (e.g. a desk or table), with the end 36 of the hand-held device 4 and the base portion 26 of the support member 20 resting on the surface 38. In this orientation, a display screen 14 of the handheld communication device 4 is held in a portrait orientation, and tilted upwards for easy viewing by a user. The mechanical strength and rigidity of the support member 20, connector element 18, and the port 10 in the side of the handheld communication device 4 are sufficient that the handheld communication device 4 can be securely supported in this position.

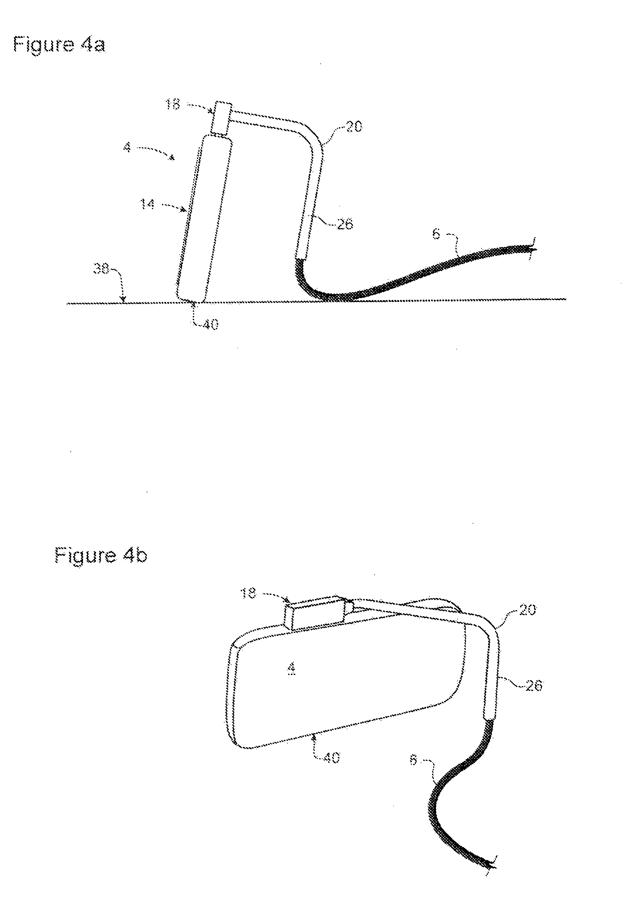

FIGs. 4a and 4b respectively show side and perspective views of the charging device 16 of FIGs. 2a and 2b, in use for supporting the handheld communication device 4 in a landscape orientation. As may be seen in FIG. 4a, the handheld communication device 4 can thus be placed on a horizontal surface 38 (e.g. a desk or table), with the side 40 of the handheld communication device 4 opposite that of the connector element 18 resting on the surface 38. In this case, the base portion 26 of the support member 20 is oriented approximately vertically, so that the cable 6 extends from the base portion 26 and projects towards the surface 38. Because the cable 6 is flexible, it can easily be turned to lay on the surface 38. However, the natural resilience of the cable 6 ensures that the cable 6 can contact the surface 38 and thereby stabilize the handheld communication device 4 to prevent its tipping over. Thus the handheld communication device 4 is supported with its display screen 14 held in the landscape orientation. The mechanical strength and rigidity of the support member 20, connector element 18, and the port 10 in the side of the handheld communication device 4 are sufficient that the handheld communication device 4 can be securely supported in this position.

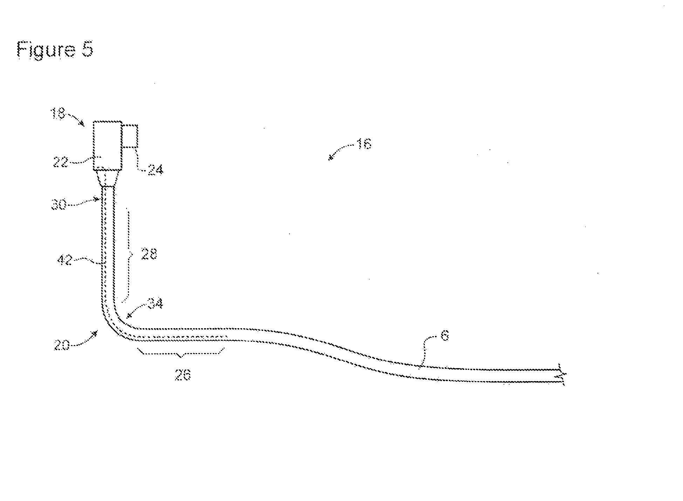

In the embodiments described above with reference to FIGs. 2-4, the support member 20 is provided as a substantially rigid hollow structure that surrounds the cable 6. However, it will be appreciated that this arrangement is not essential. In general, the support member 20 may be provided as any desired structure having suitable properties of strength and stiffness. For example, the support member 20 may be constructed by suitably stiffening a portion of the cable 6 extending from the connector element 18. In fact, the embodiment of FIG. 2 may be seen as an example of this approach, in which the cable is stiffened by means of a metal or plastic tube that surrounds the cable. FIG. 5 illustrates an alternative embodiment, in which the cable is stiffened by means of a stiffener element 42 that is incorporated within the cable, and secured to the connector element 18. If desired, the stiffener element 42 could equally be incorporated within a jacket of the cable, or secured to the outer surface of the cable (for example by means of suitable adhesives).

The stiffener element 42 may be formed of any desired material having suitable strength and stiffness, including metals or plastics. In some embodiments, the stiffener element 42 is substantially rigid, so that the cable is held in a fixed shape to define the support member 20. In other embodiments, the stiffener element 42 may be pliable, so that a user can bend support member 20 into any desired shape, which will then be maintained by the stiffener element 42. Thus, for example, a user may distort the shape of the support member 20 when "coiling-up" the cable 6 to facilitate transport of the charger device 16. When the user wishes to use the charger device 16, the proper shape of the support member 20 may be restored by straightening the base and riser portions 26 and 28, and manipulating the head portion 30 to define a desired angle between the riser portion 26 and the connector element 18. In some embodiments, restoration of the proper shape of the support member 20 can be facilitated by forming the stiffener element 42 of a shape memory alloy. In this case, the user may quickly and easily restore the support member 20 to its proper shape by applying heat to the cable near the connector element 18. Known shape memory alloys are commercially available with transition temperatures low enough that this operation can be safely performed by a user without risk of burning themselves or damaging the cable 6.

Although the above has been described with reference to certain specific embodiments, various modifications thereof will be apparent to those skilled in the art without departing from the scope of the claims appended hereto.

## Claims

1. A support for a charger device (16) used with a handheld communication device (4), the charger device (16) comprising a connector (24) for rigid engagement with a port (10) of the handheld communication device (4) and a cable (6) extending from the connector (24) to a termination device, the support comprising:
a connector element (18) comprising a substantially rigid body (22) and the connector (24) of the charger device (16) for engagement with the port (10) of the handheld communication device (4); and
a support member (20) rigidly affixed to the connector element (18) at a first end
thereof to maintain a predetermined orientation of the connector element (18) and the connector (24) of the charger device (16) relative to the support member (20) to securely support the handheld communication device (4) when the connector (24) of the charger device (16) is rigidly engaged with the port (10) of the handheld communication device (4), the support member (20) providing a substantially rigid structure to provide support to the cable (6) of the charger device (16), the support member (20) being configured to support the handheld communication device (4) in a plurality of orientations through engagement of a portion thereof, or a portion of the cable (6) of the charger device (16) protruding from a second end thereof, with an underlying surface.

2. The support of claim 1, wherein the support member (20) comprises a base portion (26), a riser portion (28) and a head end (30) attached to the connector element (18), the head end (30) being configured to define a predetermined angle between the riser (28) portion and the connector element (18).

3. The support of claim 2, wherein the predetermined angle is selected such that, when the connector (24) of the charger device (16) is engaged with the port (10) of the handheld communication device (4), the base portion (26) extends parallel to one end of the handheld communication device (4) and is separated therefrom by a desired distance.

4. The support of claim 2 or claim 3, wherein the predetermined angle is 30°.

5. The support of any of claims 2 to 4, wherein a length of the riser portion (28) is selected such that a distance between the connector (24) of the charger device (16) and the base portion (26) is similar to a distance between the port (10) of the handheld communication device (4) and an end (36) of the handheld communication device (4).

6. The support of any of claims 2 to 5, wherein a length of the base portion (26) is selected such that, when the connector (24) of the charger device (16) is engaged with the port (10) of the handheld communication device (4), the base portion (26) extends across less than an entire width of the handheld communication device (4).

7. The support of any preceding claim, wherein the support member (20) comprises a hollow tubular structure, an inner diameter of the hollow tubular structure being sized to receive the cable (6).

8. The support of any preceding claim, wherein the support member (20) further comprises a stiffener element (42) affixed to the cable (6).

9. The support of claim 8, wherein the stiffener element (42) is incorporated within the support member (20).

10. The support of claim 8, wherein the stiffener element (42) is affixed to an outer surface of the support member (20).

11. The support of any of claims 8 to 10, wherein the stiffener element (42) is formed of a shape-memory alloy.

12. The support of any preceding claim, wherein the rigid body (22) permits engagement of the connector (24) of the charger device (16) with the port (10) of the handheld communication device (4) without enclosing the handheld communication device (4).

13. A charger device (16) comprising a connector (24) for engagement with a port (10) of a handheld communication device (4), a cable (6) extending from the connector (24) to a termination device, and the support according to any one of the preceding claims.

## Patentansprüche

1. Halterung für eine Ladevorrichtung (16), die mit einer tragbaren Kommunikationsvorrichtung (4) verwendet wird, wobei die Ladevorrichtung (16) einen Verbinder (24) zum starren Eingriff mit einem Port (Anschluss) (10) der tragbaren Kommunikationsvorrichtung (4) und ein Kabel (6) umfasst, das vom Verbinder (24) zu einer Endvorrichtung verläuft, wobei die Halterung umfasst:
ein Verbinderelement (18), das einen im Wesentlichen starren Körper (22) und den
Verbinder (24) der Ladevorrichtung (16) zum Eingriff mit dem Port (10) der tragbaren Kommunikationsvorrichtung (4) umfasst; und
ein Halterungselement (20), das starr am Verbinderelement (18) an einem ersten Ende
desselben befestigt ist, um eine vorgegebene Ausrichtung des Verbinderelements (18) und des Verbinders (24) der Ladevorrichtung (16) gegenüber dem Halterungselement (20) aufrechtzuerhalten, um die tragbare Kommunikationsvorrichtung (4) sicher zu halten, wenn der Verbinder (24) der Ladevorrichtung (16) mit dem Port (10) der tragbaren Kommunikationsvorrichtung (4) in starrem Eingriff ist, wobei das Halterungselement (20) einen im Wesentlichen starren Aufbau vorsieht, um für das Kabel (6) der Ladevorrichtung (16) eine Halterung bereitzustellen, wobei das Halterungselement (20) dazu konfiguriert ist, die tragbare Kommunikationsvorrichtung (4) in mehreren Ausrichtungen durch Eingriff eines Bereichs derselben oder eines Bereichs des Kabels (6) der Ladevorrichtung (16), das von einem zweiten Ende derselben vorsteht, in eine darunterliegende Oberfläche zu halten.

2. Halterung nach Anspruch 1, wobei das Halterungselement (20) einen Basisbereich (26), einen Anstiegsbereich (28) und ein Kopfende (30) umfasst, das an dem Verbinderelement (18) angebracht ist, wobei das Kopfende (30) dazu konfiguriert ist, einen vorgegebenen Winkel zwischen dem Anstiegsbereich (28) und dem Verbinderelement (18) zu definieren.

3. Halterung nach Anspruch 2, wobei der vorgegebene Winkel so ausgewählt ist, dass, wenn der Verbinder (24) der Ladevorrichtung (16) mit dem Port (10) der tragbaren Kommunikationsvorrichtung (4) im Eingriff ist, der Basisbereich (26) parallel zu einem Ende der tragbaren Kommunikationsvorrichtung (4) verläuft und von dieser durch einen gewünschten Abstand getrennt ist.

4. Halterung nach Anspruch 2 oder Anspruch 3, wobei der vorgegebene Winkel 30° beträgt.

5. Halterung nach irgendeinem der Ansprüche 2 bis 4, wobei eine Länge des Anstiegsbereichs (28) so ausgewählt ist, dass ein Abstand zwischen dem Verbinder (24) der Ladevorrichtung (16) und dem Basisbereich (26) ähnlich einem Abstand zwischen dem Port (10) der tragbaren Kommunikationsvorrichtung (4) und einem Ende (36) der tragbaren Kommunikationsvorrichtung (4) ist.

6. Halterung nach irgendeinem der Ansprüche 2 bis 5, wobei eine Länge des Basisbereichs (26) so ausgewählt ist, dass, wenn der Verbinder (24) der Ladevorrichtung (16) mit dem Port (10) der tragbaren Kommunikationsvorrichtung (4) im Eingriff ist, der Basisbereich (26) über weniger als einer Gesamtbreite der tragbaren Kommunikationsvorrichtung (4) verläuft.

7. Halterung nach irgendeinem vorhergehenden Anspruch, wobei das Halterungselement (20) einen hohlen rohrförmigen Aufbau umfasst, wobei der Innendurchmesser des hohlen rohrförmigen Aufbaus so dimensioniert ist, dass er das Kabel (6) aufnimmt.

8. Halterung nach irgendeinem vorhergehenden Anspruch, wobei das Halterungselement (20) ferner ein Versteifungselement (42) umfasst, das an dem Kabel (6) befestigt ist.

9. Halterung nach Anspruch 8, wobei das Versteifungselement (42) in dem Halterungselement (20) eingebaut ist.

10. Halterung nach Anspruch 8, wobei das Versteifungselement (42) an einer Außenfläche des Halterungselements (20) befestigt ist.

11. Halterung nach irgendeinem der Ansprüche 8 bis 10, wobei das Versteifungselement (42) aus einer Formgedächtnislegierung gebildet ist.

12. Halterung nach irgendeinem vorhergehenden Anspruch, wobei der starre Körper (22) den Eingriff des Verbinders (24) der Ladevorrichtung (16) mit dem Port (10) der tragbaren Kommunikationsvorrichtung (4) ohne Einschließen der tragbaren Kommunikationsvorrichtung (4) gestattet.

13. Ladevorrichtung (16), die einen Verbinder (24) zum Eingriff mit einem Port (10) einer tragbaren Kommunikationsvorrichtung (4), ein Kabel (6), das von dem Verbinder (24) zu einer Endvorrichtung verläuft, und die Halterung nach irgendeinem der vorhergehenden Ansprüche umfasst.

## Revendications

1. Support pour un dispositif de chargement (16) utilisé avec un dispositif de communication portatif (4), le dispositif de chargement (16) comprenant un connecteur (24), destiné à s'engager de manière rigide dans un port (10) du dispositif de communication portatif (4), et un câble (6) qui s'étend entre le connecteur (24) et un dispositif de terminaison, le support comprenant :
un élément de connexion (18) comprenant un corps substantiellement rigide (22) et le connecteur (24) du dispositif de chargement (16) destiné à s'engager avec le port (10) du dispositif de communication portatif (4) ; et
un élément porteur (20) fixé de manière rigide à l'élément de connexion (18) par une première extrémité de celui-ci afin de maintenir une orientation prédéterminée de l'élément de connexion (18) et du connecteur (24) du dispositif de chargement (16) par rapport à l'élément porteur (20) afin de supporter le dispositif de communication portatif (4) de manière sûre lorsque le connecteur (24) du dispositif de chargement (16) est engagé de manière rigide dans le port (10) du dispositif de communication portatif (4), l'élément porteur (20) fournissant une structure substantiellement rigide afin de fournir un support au câble (6) du dispositif de chargement (16), l'élément porteur (20) étant configuré pour supporter le dispositif de communication portatif (4) dans une pluralité d'orientations du fait de l'engagement avec une partie de celui-ci, ou avec une partie du câble (6) du dispositif de chargement (16) qui fait saillie d'une seconde extrémité, dans une surface sous-jacente.

2. Support selon la revendication 1, dans lequel l'élément porteur (20) comprend une partie de base (26), une partie dressée (28) et une tête d'extrémité (30) fixée à l'élément de connexion (18), la tête d'extrémité (30) étant configurée pour définir un angle prédéterminé entre la partie dressée (28) et l'élément de connexion (18).

3. Support selon la revendication 2, dans lequel l'angle prédéterminé est choisi de manière à ce que, lorsque le connecteur (24) du dispositif de chargement (16) est engagé dans le port (10) du dispositif de communication portatif (4), la partie de base (26) s'étend parallèlement à une extrémité du dispositif de communication portatif (4) et en est séparée d'une distance voulue.

4. Support selon la revendication 2 ou la revendication 3, dans lequel l'angle prédéterminé est de 30°.

5. Support selon l'une quelconque des revendications 2 à 4, dans lequel une longueur de la partie dressée (28) est choisie de telle manière qu'une distance entre le connecteur (24) du dispositif de chargement (16) et la partie de base (26) soit similaire à une distance entre le port (10) du dispositif de communication portatif (4) et une extrémité (36) du dispositif de communication portatif (4).

6. Support selon l'une quelconque des revendications 2 à 5, dans lequel une longueur de la partie de base (26) est choisie de telle manière que, lorsque le connecteur (24) du dispositif de chargement (16) est engagé dans le port (10) du dispositif de communication portatif (4), la partie de base (26) s'étend sur moins de la totalité de la largeur du dispositif de communication portatif (4).

7. Support selon l'une quelconque des revendications précédentes, dans lequel l'élément porteur (20) comprend une structure tubulaire creuse, le diamètre intérieur de la structure tubulaire creuse étant dimensionné de manière à recevoir le câble (6).

8. Support selon l'une quelconque des revendications précédentes, dans lequel l'élément porteur (20) comprend en outre un élément raidisseur (42) fixé sur le câble (6).

9. Support selon la revendication 8, dans lequel l'élément raidisseur (42) est intégré à l'intérieur de l'élément porteur (20).

10. Support selon la revendication 8, dans lequel l'élément raidisseur (42) est fixé sur une surface extérieure de l'élément porteur (20).

11. Support selon l'une quelconque des revendications 8 à 10, dans lequel l'élément raidisseur (42) est formé d'un alliage à mémoire de forme.

12. Support selon l'une quelconque des revendications précédentes, dans lequel le corps rigide (22) permet l'engagement du connecteur (24) du dispositif de chargement (16) dans le port (10) du dispositif de communication portatif (4) sans enfermer le dispositif de communication portatif (4).

13. Dispositif de chargement (16) comprenant un connecteur (24) destiné à s'engager dans un port (10) d'un dispositif de communication portatif (4), un câble (6) s'étendant entre le connecteur (24) et un dispositif de terminaison et le support selon l'une quelconque des revendications précédentes.
